Europäisches Patentamt

European Patent Office

Office européen des brevets

(11) Numéro de publication : **0 685 917 A1**

# (12) DEMANDE DE BREVET EUROPEEN

(21) Numéro de dépôt : **95401237.3**

(22) Date de dépôt : **29.05.95**

(51) Int. Cl.$^6$ : **H02J 1/10, H02M 3/28, H02H 9/02**

(30) Priorité : **31.05.94 FR 9406603**

(43) Date de publication de la demande :
**06.12.95 Bulletin 95/49**

(84) Etats contractants désignés :
**AT BE CH DE ES FR GB IT LI NL SE**

(71) Demandeur : **ALCATEL CIT**
**12 Rue de la Baume**
**F-75008 Paris (FR)**

(72) Inventeur : **Gabillet, Jean**
**Kerdrinquen**
**F-22300 Ploumilliau (FR)**

(74) Mandataire : **Sciaux, Edmond et al**
**c/o SOSPI,**
**14-16 rue de la Baume**
**F-75008 Paris (FR)**

(54) **Système d'alimentation sécurisé.**

(57) Dans ce système, chaque charge (Cj) comporte une liaison individuelle d'alimentation (LIj), indépendante des autres charges. Selon un mode de réalisation préférentiel, il comporte n+1 alimentations (A1, ..., An+1). Chaque alimentation comporte, pour chaque charge (C1, ..., Ck) : un limiteur d'intensité (LCij) limitant l'intensité à $\frac{Ij}{n}$, où Ij est l'intensité maximale consommée par cette charge (Cj), et un dispositif de couplage (Cij) propre à cette charge (Cj). La puissance disponible sur chaque liaison individuelle d'alimentation (LI1, ..., LIk) est beaucoup plus faible que sur un bus d'alimentation classique. Le risque d'ignition, en cas de court-circuit, est considérablement réduit.

Application à la construction d'équipements électroniques.

FIG.2

EP 0 685 917 A1

L'invention concerne un système d'alimentation sécurisé pour alimenter en courant électrique une pluralité de charges à partir d'une pluralité d'alimentations. Un tel système est utilisé dans de nombreux équipements électroniques tel qu'un central téléphonique ou un système informatique. Un tel équipement électronique est constitué de cartes consommatrices de courant, qui sont alimentées par des dispositifs appelés alimentations, via des liaisons d'alimentation.

Un premier impératif est de protéger le système d'alimentation contre une défaillance de l'une des alimentations qui le constituent. Un second impératif est d'éviter que l'ensemble de l'équipement tombe en panne lors d'une défaillance sur l'une des cartes consommatrices de courant. D'autre part, le système d'alimentation ne doit pas propager de perturbations dûes à un appel de courant lors de l'insertion d'une carte dans l'équipement. Enfin, les cartes consommatrices de courant, et toutes les liaisons intermédiaires, doivent être protégées contre une ignition causée par une surcharge prolongée.

Un système d'alimentation sécurisé classique comporte une seule liaison appelée bus d'alimentation, pour chaque tension à distribuer à toutes les cartes consommatrices. Elle est constituée par un conducteur de gros calibre car la somme des intensités consommées atteint des valeurs élevées.

Il est connu de protéger un système d'alimentation contre la défaillance d'une alimentation, par une redondance des alimentations qui le constituent, au moyen de dispositifs de couplage permettant d'additionner les intensités fournies par les alimentations fournissant une même tension, tout en interdisant une inversion du sens du courant dans chaque alimentation. Il est connu de protéger chaque alimentation contre une surcharge, au moyen d'un limiteur qui limite l'intensité débitée par cette alimentation à la valeur maximale que peut supporter cette alimentation. Un tel limiteur ne protège pas suffisamment les cartes qui sont reliées à cette alimentation, parce que chaque carte consomme généralement une intensité beaucoup plus faible que l'intensité maximale que peut fournir une alimentation. Il est donc prévu en outre sur chaque carte un limiteur qui limite l'intensité consommée par cette carte à la valeur maximale correspondant au fonctionnement normal de cette carte, et qui est très inférieure à la valeur maximale que peut fournir l'alimentation. L'entrée du limiteur de chaque carte est reliée, par le bus d'alimentation, aux sorties des dispositifs de couplage des alimentations.

Un tel système connu assure effectivement une redondance des alimentations, puisqu'elles sont mises en parallèle par des dispositifs de couplage; et assure une limitation des perturbations dûes à des défaillances ou dûes à des insertions de cartes. Il présente cependant un inconvénient : Une forte puissance est disponible sur le bus. Il y a donc un risque important d'ignition en cas de court-circuit entre le bus et la masse. La liberté de conception des systèmes d'alimentation est limitée, car il est difficile de respecter les normes de sécurité, telle que la norme CEI 95O, qui imposent de limiter la puissance disponible sur un bus d'alimentation à 240 watts dans les zones accessibles aux opérateurs.

Le but de l'invention est de remédier à cet inconvénient des systèmes d'alimentation sécurisés de types connus. L'objet de l'invention est un système d'alimentation sécurisé pour alimenter en courant électrique une pluralité de charges à partir d'une pluralité d'alimentations, comportant :

- des moyens de couplage pour assurer une addition des intensités fournies par les alimentations, tout en interdisant une inversion du sens du courant dans chaque alimentation;
- et des moyens limiteurs pour limiter l'intensité débitée par chaque alimentation, à une valeur maximale prédéterminée;

caractérisé en ce que pour chaque charge il comporte un bus d'alimentation, propre à cette charge, et reliant cette charge à chacune des alimentations;

en ce que les moyens de couplage comportent dans chaque alimentation, pour chaque charge, un dispositif de couplage propre à cette charge, pour coupler cette alimentation au bus d'alimentation propre à cette charge;

et en ce que les moyens limiteurs comportent, dans chaque alimentation, pour chaque charge un limiteur de courant pour limiter l'intensité fournie par cette alimentation à cette charge

Le système ainsi caractérisé présente peu de risques d'ignition sur les liaisons entre les alimentations et les charges puisque ces liaisons sont des liaisons individuelles ne transportant que l'intensité maximale d'alimentation d'une seule charge, qui est beaucoup plus faible que l'intensité maximale que peut délivrer un bus classique d'alimentation, alimenté par plusieurs alimentations en parallèle. Par ailleurs, les dispositifs de couplage permettent de secourir une alimentation défaillante par la mise en parallèle des sorties des alimentations. Le limiteur correspondant à chaque carte dans chaque alimentation limite l'appel de courant créé par l'insertion de la carte correspondant à ce limiteur, ou créé par une défaillance de cette carte. Il n'y a donc pas de propagation de perturbations d'une carte vers une autre.

L'invention sera mieux comprise et d'autres caractéristiques apparaîtront à l'aide de la description d'un exemple de réalisation et des figures l'accompagnant :

- la figure 1 représente le schéma synoptique d'un système d'alimentation sécurisé selon l'art antérieur;
- la figure 2 représente le schéma synoptique d'un système d'alimentation sécurisé selon l'invention;
- les figures 3 et 4 représentent respectivement deux modes de réalisation d'un dispositif limiteur de courant, comportant des moyens pour synchroniser le réarmement de tous les limiteurs d'un système.

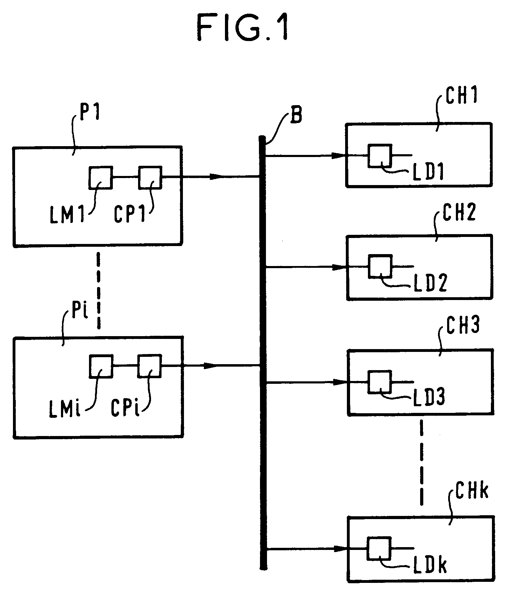

Le système représenté sur la figure 1 alimente k charges qui sont constituées par des cartes électroniques CH1, CH2, CH3, ..., CHk. Il comporte une pluralité d'alimentations P1,...,Pi fournissant une même tension à l'ensemble des cartes, via un bus de puissance, B. Chaque alimentation P1,...,Pi comporte un limiteur de courant, référencé respectivement LM1, ..., LMi; et est reliée en parallèle avec les alimentations homologues grâce à un coupleur CP1,...,CPi. Le courant fourni par l'alimentation P1 traverse d'abord le limiteur LM1 qui limite l'intensité fournie à la valeur maximale que peut débiter l'alimentation P1. Puis il traverse le coupleur CP1 dont une sortie est reliée au bus B. Il en est de même dans les autres alimentations.

Chacune des cartes CH1, ..., CHk comporte un limiteur, respectivement LD1, ..., LDk qui limite le courant consommé par la carte à une valeur prédéterminée en fonction des composants électroniques que comporte cette carte, et qui est très inférieure à l'intensité maximale que peut débiter l'une des alimentation P1,...,Pi. Les limiteurs LD1, ..., LDk protègent parfaitement les cartes CH1, ..., CHk contre le risque d'ignition, et contre la propagation de perturbations lors de l'insertion d'une carte ou lors d'une défaillance d'une carte, mais ils ne protègent pas le bus B en cas de court-circuit sur ce bus.

Les limiteurs LM1,...,LMi protègent respectivement les alimentations P1,...,Pi contre une destruction en cas de surcharge, mais ils limitent le courant dans le bus B à une valeur qui est égale à la somme de l'intensité maximale que peut fournir les alimentations P1,...,Pi. La puissance qui peut être dissipée dans le bus B en cas de court-circuit est donc élevée, ce qui augmente le risque d'ignition. D'autre part, il est nécessaire de restreindre l'accès des opérateurs afin de respecter les normes de sécurité si ce bus est situé dans les zones accessibles aux opérateurs, et si la puissance disponible est supérieure à 240 W.

Les dispositifs de couplage CP1,...,CPi sont constitués classiquement d'une diode ou bien d'un transistor MOS associé à un circuit de commande qui bloque ce transistor lorsque le courant tend à s'inverser dans l'alimentation.

Les limiteurs LM1,..., LMi, et les limiteurs LD1, ..., LDk sont constitués classiquement d'un transistor, d'une résistance de faible valeur, et d'un circuit de commande. Le transistor et la résistance sont parcourus par le courant débité, la résistance étant utilisée pour mesurer le courant débité. On distingue deux types de limiteur de courant :
- des limiteurs qui se comportent comme des régulateurs de courant dès que l'intensité atteint une valeur maximale prédéterminée;
- et des limiteurs à disjonction, qui coupent le circuit dès que l'intensité atteint une valeur maximale prédéterminée, même si ce n'est qu'une surintensité passagère.

Parmi les limiteurs à disjonction on distingue deux catégories :
- Ceux à réarmement automatique.
- Ceux à réarmement par un opérateur.

Les premiers présentent un inconvénient lorsque plusieurs alimentations sont reliées en parallèle et que l'intensité totale consommée par les charges est supérieure à l'intensité maximale que peut fournir une seule alimentation : si les limiteurs ne se réarment pas tous au même instant, le courant ne se répartit pas de manière égale dans tous les limiteurs. Celui qui se réarme en premier disjoncte, puis les autres risquent de disjoncter en cascade.

Les seconds présentent un autre inconvénient : Une fois que le limiteur a ouvert le circuit, il est nécessaire qu'un opérateur intervienne pour réarmer le limiteur.

Pour éviter ces inconvénients, la solution classique consiste à utiliser des limiteurs qui régulent le courant à une valeur maximale, au lieu de couper le circuit. Il est alors nécessaire de prévoir des dissipateurs de chaleur adaptés à la puissance dissipée dans les limiteurs lorsqu'ils régulent le courant à sa valeur maximale.

Classiquement, les alimentations P1,...,Pi sont capables de fournir la même intensité maximale et celle-ci est égale à $\dfrac{1}{i-1}$ fois l'intensité totale qui est consommée par l'ensemble des cartes CH1, ..., CHk, pour qu'en cas de défaillance de l'une des alimentations, les i-1 alimentations restantes puissent la secourir.

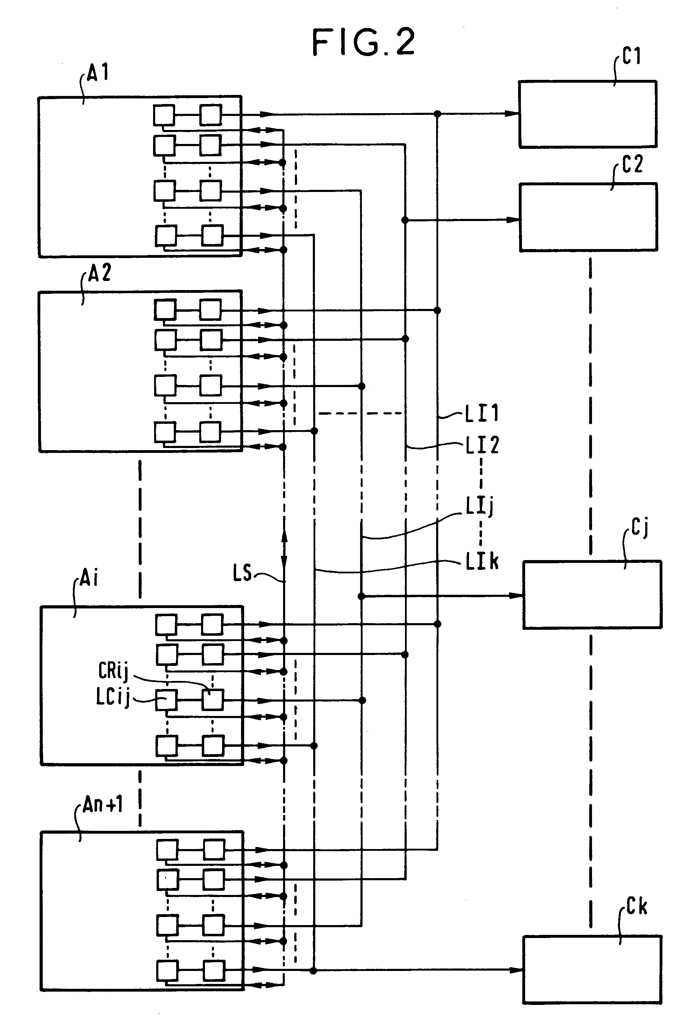

La figure 2 représente le schéma synoptique d'un système d'alimentation sécurisé, selon l'invention. Pour alimenter k charges constituées par des cartes électroniques $C_1$, $C_2$, ..., $C_j$, ..., $C_k$, il comporte :
- n+1 alimentations A1, A2, ..., Ai, ..., An+1;
- k liaisons individuelles d'alimentation LI1, LI2, ..., LIi, ..., LIk;
- et une liaison LS de synchronisation.

Chacune des alimentations A1, ..., An+1 comporte k sorties, chaque carte C1,..., Ck ayant une entrée reliée respectivement à une sortie de chacune des alimentations A1, ..., An+1. Par exemple, la carte Cj, pour j=1 à k, est reliée par sa liaison individuelle d'alimentation, LIj, à la jième sortie de chacune des alimentations A1, ..., An+1. Chaque sortie d'une alimentation A1, ..., An+1 est une sortie individuelle propre à l'une des cartes C1, ..., Ck, et est munie d'un limiteur de courant et d'un dispositif de couplage. Par exemple la première sortie de l'alimentation Ai comporte un limiteur LCi1 et un dispositif de couplage CRi1, en série, reliés à la liaison individuelle LI1. La jième sortie de l'alimentation Ai comporte un limiteur LCij et un dispositif de couplages CRij, en série, reliés à la liaison individuelle LIj d'alimentation de la carte Cj.

Si Ij est l'intensité maximale que peut consommer la carte Cj, le limiteur LCij limite l'intensité fournie par l'alimentation Ai à $\frac{Ij}{n}$. Les limiteurs homologues du limiteur LCij dans les autres alimentations limitent aussi l'intensité à $\frac{Ij}{n}$. Par conséquent les alimentions A1, ..., An+1 assurent une redondance suffisante pour maintenir une alimentation convenable de la carte Cj si l'une quelconque des alimentations est défaillante.

Les limiteurs correspondant aux différentes sorties d'une alimentation peuvent être réglés pour limiter l'intensité à des valeurs différentes si les cartes C1, ..., Ck ont besoin d'intensités nettement différentes.

Les limiteurs tels que LCij évitent la propagation de perturbations d'une carte à une autre, dans le cas de l'insertion d'une carte ou dans le cas de la défaillance d'une carte. En cas de court-circuit sur les liaisons d'alimentation LI1, ..., LIk, ils limitent l'intensité parcourant chaque liaison individuelle d'alimentation. Par exemple, la liaison LIj n'aura à supporter qu'une intensité égale à $\frac{n + 1}{n}$ Ij dans le pire des cas. La puissance disponible sur chaque liaison individuelle d'alimentation LI1, ..., LIk est donc très inférieure à celle qui serait disponible sur un bus d'alimentation classique. Le risque d'ignition est donc beaucoup plus faible, pour des charges C1, ..., Ck données.

La réalisation des limiteurs tels que LCij et des dispositifs de couplage CRij peut être tout à fait classique, c'est-à-dire que chaque limiteur peut comporter un circuit régulateur de courant capable de maintenir le courant à sa valeur maximale pendant une durée très longue. Il est alors nécessaire de prévoir des dissipateurs de chaleur encombrants et coûteux.

Selon un mode de réalisation préférentiel les limiteurs $LC_{ij}$ sont du type à disjonction, pour éviter ce problème de dissipation, et à réarmement automatique, pour éviter l'intervention d'un opérateur.

Il se pose alors un problème au démarrage, ou lors d'un réarmement automatique après la disparition d'une surintensité passagère, parce que l'intensité consommée par l'ensemble des cartes est généralement supérieure à l'intensité maximale que peut fournir une seule alimentation : si les limiteurs ne se réarment pas tous au même instant, le courant ne se répartit pas de manière égale dans tous les limiteurs, celui qui se réarme en premier disjoncte, puis les autres risquent de disjoncter en cascade. Pour synchroniser le réarmement des limiteurs, il est prévu une ligne de synchronisation LS qui relie entre eux tous les limiteurs LCij de toutes alimentations A1, ..., An+1.

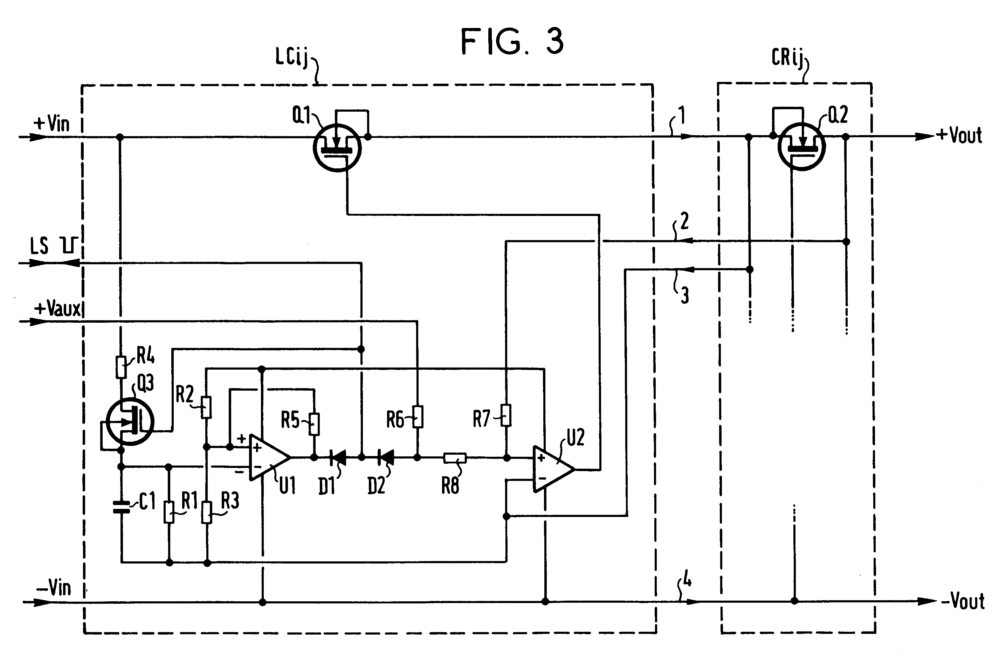

La figure 3 représente le schéma synoptique d'un exemple de réalisation du limiteur LCij. Le schéma synoptique du coupleur CRij est représenté partiellement. Il comporte un transistor MOS Q2 qui est utilisé comme commutateur pour le couplage, et comme une résistance pour mesurer l'intensité du courant débité. La réalisation de ce coupleur CRij est à la portée de l'Homme de l'Art.

Le limiteur LCij comporte essentiellement :
- un transistor MOS Q1 qui est utilisé comme un commutateur, sa résistance interne étant très faible lorsque le limiteur est en régime de fonctionnement normal, et ayant une valeur pratiquement infinie lorsque le limiteur a disjoncté;
- un amplificateur opérationnel U2, associé à des résistances R6, R7, R8 pour constituer un comparateur commandant le blocage du transistor Q1 lorsque l'intensité débitée dépasse une valeur de seuil prédéterminée;
- un amplificateur opérationnel U1, et un transistor MOS Q3, associés avec des résistances R1, R2, R3, R4, R5, et un condensateur C1, pour constituer un multivibrateur astable;
- et deux diodes D1, D2 permettent de coupler le multivibrateur, le comparateur, et la ligne de synchronisation LS.

Les transistors Q1, Q2, Q3, sont du type MOS à déplétion, et canal N.

Le limiteur LCij comporte en outre :
- une entrée recevant une tension +Vin et étant reliée au drain de Q1;
- une entrée recevant une tension auxiliaire +Vaux, supérieure à la tension +Vin;
- une entrée recevant une tension -Vin,
- une entrée de synchronisation reliée à la ligne LS de synchronisation;
- une entrée 2 et une entrée 3 reliées respectivement en aval et en amont du transistor Q2 du dispositif de couplage CRij, pour mesurer la chute de tension entre le drain et la source de ce transistor, cette chute de tension étant représentative de l'intensité débitée;
- une sortie 1 qui fournit la tension +Vin, moins une petite chute de tension créée par le transistor Q1, cette sortie 1 étant reliée à la source du transistor Q1;
- et une sortie 4 transmettant la tension -Vin sans modification.

La source de Q2 est reliée à la sortie 1. Le drain de Q2 est relié à la liaison LIj à laquelle elle fournit une tension +Vout égale à +Vin moins les petites chutes de tension dans les transistors Q1 et Q2. Une entrée du coupleur CRij est reliée à la sortie 4 pour recevoir la tension-Vin. Une sortie du coupleur CRij fournit, à une ligne de masse du système, une tension -Vout égale à la tension -Vin.

Le drain du transistor Q1 est relié à l'entrée recevant la tension +Vin. La source du transistor Q1 est reliée à la sortie 1. La grille du transistor Q1 est reliée à la sortie de l'amplificateur opérationnel U2. L'entrée inversante de l'amplificateur opérationnel U2 est reliée à l'entrée 3. L'entrée non inversante de l'amplificateur opérationnel U2 est reliée à une borne commune des résistances R7 et R8, l'autre borne de la résistance R7 étant reliée à l'entrée 2. L'amplificateur U2 est alimenté par la tension +Vaux et par la tension -Vin. Les résistances R6 et R8 ont une borne commune qui est reliée à l'anode de la diode D2, alors que l'autre borne de la résistance R6 est reliée à la tension +Vaux.

L'amplificateur opérationnel U1 comporte :
- deux entrées d'alimentation reliées respectivement à la tension +Vaux et à la tension -Vin;
- une sortie reliée à la cathode de la diode D1 et à une première borne de la résistance R5, l'anode de la diode D1 étant reliée : à la cathode de la diode D2, à la ligne de synchronisation LS, et à la grille du transistor Q3;
- une entrée non inversante reliée : à la seconde borne de la résistance R5, à une première borne de la résistance R2, et à une première borne de la résistance R3;
- et une entrée inversante reliée : à la source du transistor Q3, à une première borne du condensateur C1, et à une première borne de la résistance R1.

La seconde borne de la résistance R2 est reliée à la tension +Vaux. Les secondes bornes du condensateur C1, de la résistance R1, et de la résistance R3 sont reliées à l'entrée 3 qui reçoit la tension prélevée en amont du transistor Q2. Le drain du transistor Q3 est relié à la tension +Vin par une résistance R4.

En régime de fonctionnement normal, le transistor Q1 est passant et provoque une très faible chute de tension. La diode D2 est bloquée car une tension égale à +Vin est présente sur la ligne de synchronisation LS. L'amplificateur opérationnel U2 compare la tension en amont du transistor Q2, et une tension fournie par le pont de résistance R6, R8, R7 qui fournit une tension égale à la somme d'une fraction de la tension +Vout en aval du transistor Q2 et d'une fraction de la tension fixée +Vaux. Les valeurs des résistances R6, R7, R8 sont choisies telles que lorsque l'intensité maximale tolérable est atteinte, il y a égalité entre la tension appliquée à l'entrée non inversante et la tension appliquée à l'entrée inversante.

Au-delà de cette intensité maximale, la sortie de l'amplificateur U2 passe d'un niveau haut à un niveau intermédiaire assurant un courant constant dans le transistor Q1. En effet l'amplificateur U2 polarise Q1 de manière à ce que la chute de tension produite par ce courant dans Q2, décalée par le pont R6, R8, R7, produise sur l'entrée non inversante de U2 une tension égale à celle présente sur l'entrée inversante.

La tension apparaissant aux bornes de Q1 charge le condensateur C1 par l'intermédiaire de la résistance R4 et du transistor Q3 qui est saturé. La durée de cette charge est déterminée par la constante de temps définie par R4, R1, et C1; ainsi que par la tension aux bornes de Q1. Lorsque la tension aux bornes de C1 atteint la tension présente sur l'entrée non inversante de l'amplificateur U1, la sortie de celui-ci passe brutalement du niveau intermédiaire au niveau bas. La résistance R5 introduit un hystérisis qui verrouille ce changement d'état. Le niveau bas fourni par la sortie de l'amplificateur U1 est alors appliqué par la diode D2 sur l'entrée non inversante de l'amplificateur U2. Il a pour effet de faire passer sa sortie du niveau intermédiaire à un niveau bas qui bloque complètement le transistor Q1.

Ce niveau bas en sortie de l'amplificateur U1 est aussi transmis aux autres limiteurs par la ligne de synchronisation LS. Il bloque tous les transistors homologues de Q1 et provoque donc la coupure totale du courant fourni par l'alimentation. Ce niveau bas a aussi pour effet de bloquer le transistor Q3 par application d'un niveau bas sur sa grille. Alors le condensateur C1 se décharge à travers la résistance R1.

L'amplificateur U2 est verrouillé jusqu'à ce qu'un niveau bas, voisin de -Vout, soit appliqué sur la cathode de la diode D2. Ce niveau bas peut être appliqué soit par la ligne de synchronisation LS, soit par le multivibrateur du limiteur LCij, ce multivibrateur émettant périodiquement une impulsion au niveau bas.

Le condensateur C1 décharge. Au bout d'un certain temps la tension qu'il applique à l'entrée inversante de l'amplificateur Q1 devient inférieure à la tension qu'il applique à l'entrée non inversante par les résistances R2, R3, R5. La sortie de l'amplificateur U1 repasse alors brutalement au niveau haut, et ce changement est appliqué à la ligne de synchronisation LS et à la grille du transistor Q3 pour le débloquer.

Lorsque la borne commune aux diodes D3 et D4 passe au niveau bas, que ce soit à cause du multivibrateur local, ou à cause d'un autre multivibrateur situé dans un autre limiteur du courant, il en résulte un forçage de la tension appliquée à l'entrée non inversante de l'amplificateur U2. Ce forçage a pour effet de faire basculer le comparateur constitué par l'amplificateur U2, et donc de réarmer le limiteur.

Lorsque la ligne de synchronisation remonte à l'état haut, tous les amplificateurs homologues à U2 sont autorisés à remettre en conduction les transistors homologues de Q1. Si la surcharge est encore présente, l'amplificateur U2 limite à nouveau le courant dans Q1 et un nouveau cycle de disjonction et réarmement recommence. Si la surcharge a disparu, tous les transistors Q1 se remettent en conduction au moment de la remontée du niveau logique sur la ligne de synchronisation, et ce réarmement simultané permet le redémarrage de l'ensemble du système.

Lors d'une surintensité passagère, c'est le circuit limiteur dont le condensateur C1 a atteint en premier le seuil de décision qui commande le réarmement des autres au moyen de la ligne de synchronisation. Ainsi la dispersion sur la composants R1, R2, R3, R4, R5, C1, U1 n'affecte en rien la synchronisation du réarmement de tous les limiteurs.

Il est à remarquer que la ligne de synchronisation LS peut être utilisée aussi pour télécommander une mise à l'arrêt de toutes les cartes électroniques alimentées par le système d'alimentation, en imposant par un moyen quelconque un niveau bas sur cette ligne de synchronisation LS.

La mesure de l'intensité du courant pourrait être faite au moyen d'une résistance classique, au lieu d'utiliser le transistor Q2 du dispositif de couplage.

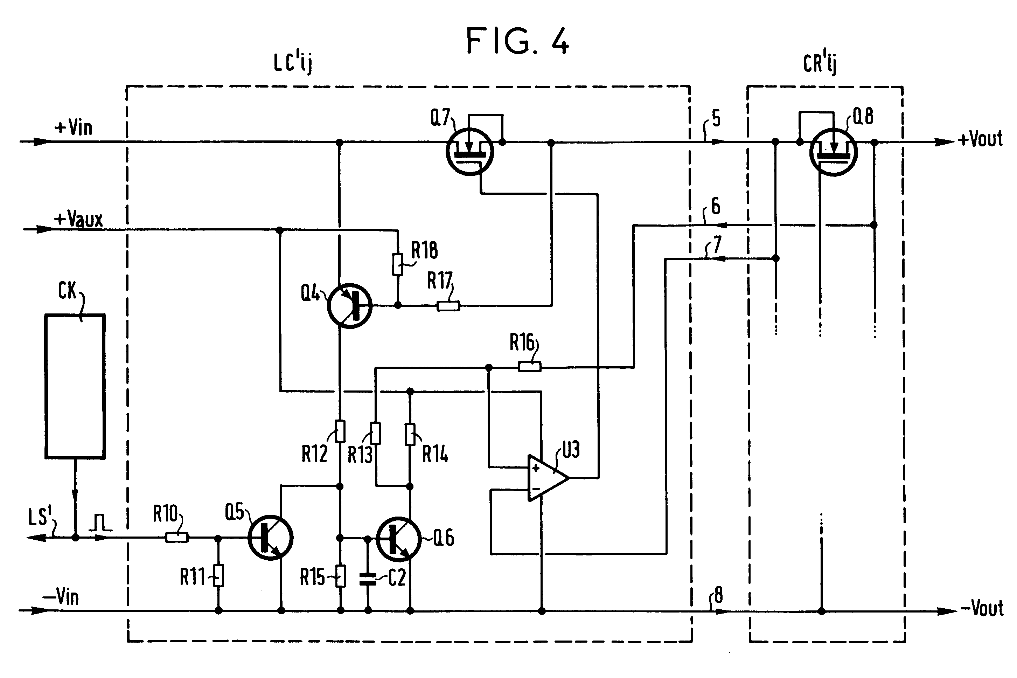

La figure 4 représente le schéma synoptique d'un autre mode de réalisation LM1' du limiteur de l'alimentation P1. Dans ce mode de réalisation, tous les limiteurs sont reliés en parallèle à une ligne de synchronisation LS' qui est reliée à une horloge CK fournissant périodiquement une impulsion au niveau haut, pour permettre un réarmement simultané de tous les limiteurs lors du démarrage du système ou après la disparition d'une surintensité. La figure 4 représente partiellement le dispositif de couplage associé CR'ij. Ce dernier comporte un transistor MOS Q8 dont la résistance interne à l'état passant est utilisée pour mesurer l'intensité débitée. Le reste du dispositif de couplage CR'ij n'est pas représenté, car il n'intervient pas dans le fonctionnement du limiteur LC'ij. D'autre part sa réalisation est à la portée de l'Homme de l'Art.

Le limiteur LC'ij comporte essentiellement :

- un transistor MOS Q7 utilisé comme un commutateur, sa résistance interne ayant une valeur très faible lorsque le limiteur est en régime de fonctionnement normal, et ayant une valeur pratiquement infinie lorsque le limiteur a disjoncté;
- un amplificateur opérationnel U3 associé à deux résistances R13 et R16 pour constituer un comparateur commandant le transistor Q7, pour le bloquer lorsque l'intensité débitée dépasse une valeur de seuil prédéterminée;
- un multivibrateur bistable constitué de trois transistors bipolaires Q4, Q5, Q6, et de résistances R12, R14, R15, R17, R18.

Le limiteur LC'ij comporte en outre:
- une entrée recevant une tension +Vin;
- une entrée recevant une tension auxiliaire +Vaux;
- une entrée reliée à une ligne de synchronisation pour recevoir un signal d'horloge de synchronisation;
- une entrée recevant une tension -Vin,
- une sortie 5 fournissant une tension égale à +Vin moins une petite chute de tension produite par le transistor Q7;
- une sortie 8 transmettant sans modification la tension -Vin;
- et deux entrées, 6 et 7, reliées respectivement en aval et en amont du transistor Q8 du dispositif de couplage C'ij, pour mesurer une tension repésentative de l'intensité débitée.

Le coupleur CR'ij restitue une tension +Vout égale à la tension fournie par la sortie 5, moins une petite chute de tension dans le transistor Q8. Il restitue, d'autre part, une tension -Vout égale à -Vin.

Les transistors Q7 et Q8 sont du type MOS à dépletion et à canal N. Le transistor Q4 est un transistor bipôlaire PNP. Les transistors Q5 et Q6 sont des transistors bipôlaires NPN.

Le drain du transistor Q7 est relié à l'entrée recevant la tension +Vin. Sa source est reliée à la sortie 5. Sa grille est reliée à la sortie de l'amplificateur opérationnel U3. L'amplificateur U3 comporte deux entrées d'alimentation reliées respectivement à l'entrée recevant la tension +Vaux et à l'entrée recevant la tension -Vin. Il comporte en outre : une entrée inversante reliée à l'entrée 7, et une entrée non inversante reliée à une borne commune aux résistances R13 et R16, la seconde borne de la résistance R16 étant reliée à l'entrée 6. La seconde borne de la résistance R13 est reliée au collecteur du transistor Q6. L'émetteur du transistor Q6 est relié à l'entrée recevant la tension -Vin. Son collecteur est relié en outre à la tension +Vaux par une résistance R14.

En régime normal, ce transistor Q6 est saturé, en l'absence de signal de synchronisation H, par conséquent son collecteur est à une tension voisine de -Vin. Les résistances R13 et R16 constituent un pont diviseur qui applique à l'entrée non inversante de l'amplificateur U3 une fraction de la tension prélevée en aval du transistor Q8. Par ailleurs, l'entrée inversante de l'amplificateur U3 reçoit la tension qui est prélevée en amont du transistor Q8. Les valeurs des résistances R13 et R16 sont choisies telles que lorsque l'intensité débitée atteint la valeur maximale tolérable, la tension sur la borne commune de R13 et R16 est égale à la tension en amont du transistor Q8.

Ainsi, si l'intensité débitée dépasse la valeur maximale tolérable, la sortie de l'amplificateur U3 passe d'un niveau haut à un niveau intermédiaire assurant un courant constant dans le transistor Q7. L'amplificateur U3 polarise Q7 de telle manière que la chute de tension produite par ce courant dans le transistor Q8, décalée par le pont R16, R13, R14, produise sur l'entrée non inversante de l'amplificateur U3 une tension égale à celle présente sur l'entrée inversante. Si la chute de tension aux bornes du transistor Q7 dépasse le seuil créé par le seuil de conduction de la jonction émetteur-base du transistor Q4, et les résistances R17 et R18, le transistor Q4 entre en conduction.

Cet état est verrouillé au moyen du multivibrateur bistable constitué par les transistors Q4 et Q6. L'émetteur du transistor Q4 est relié à l'entrée recevant la tension +Vin. Son collecteur est relié à une première borne d'une résistance R12. Sa base est reliée à un point commun des résistances R17 et R18. Les secondes bornes des résistances R17 et R18 sont reliées respectivement à la source du transistor Q7 et à l'entrée recevant la tension +Vaux. La seconde borne de la résistance R12 est reliée à la base du transistor Q6 et à une première borne de la résistance R15. La seconde borne de la résistance R15 est reliée à l'entrée recevant la tension -Vin. Le collecteur du transistor Q6 est relié d'une part à la seconde borne de la résistance R13 déjà mentionnée, et d'autre part à une première borne de la résistance R14, la seconde borne de la résistance R14 étant reliée à la tension +Vaux.

En régime normal, le transistor Q4 est bloqué. Lorsque le limiteur disjoncte, la tension en aval du transistor Q7 descend et devient égale à -Vin. Par conséquent la résistance R17 provoque la conduction du transistor Q4. Le courant transmis par Q4 débloque alors le transistor Q6. La tension du collecteur du transistor Q6 diminuant, la tension ramenée à l'entrée inversante de l'amplificateur U3 par le pont R13, R16, diminue et verrouille l'état de l'amplificateur U3. Ce dernier fournit un niveau bas qui bloque le transistor Q7, tant qu'il n'y a pas de réarmement.

Il est prévu un condensateur C2 entre la base du transistor Q6 et l'entrée recevant la tension -Vin afin d'éviter que le multivibrateur bistable puisse changer d'état, et confirmer un blocage du transistor Q7, lors d'une surintensité ayant un durée très faible et qui est donc inoffensive.

Le réarmement du limiteur LC'ij est assuré par le transistor Q5 ayant son collecteur relié à la base du transistor Q6 et son émetteur relié à l'entrée recevant la tension -Vin. Sa base est reliée à l'entrée recevant le signal de synchronisation par une résistance R10, et à l'entrée recevant la tension -Vin par la résistance R11. Le signal de synchronisation est constitué d'impulsions périodiques à un niveau haut voisin de +Vin qui rend conducteur le transistor Q5 pour dériver le courant fourni par le transistor Q4. Le transistor Q6 se bloque alors La tension fournie par le pont R13, R14, R16 reprend une valeur supérieure à la tension -Vin qui est appliquée à l'entrée inversante. L'amplificateur U3 change donc d'état. Sa sortie fournit un niveau haut qui débloque le transistor Q7. A la fin de l'impulsion du signal de synchronisation, le transistor Q7 reste dans cet état passant s'il n'y a pas de surintensité encore présente.

## Revendications

**1)** Système d'alimentation sécurisé, pour alimenter en courant électrique une pluralité de charges (C1, ..., Cj, ..., Ck) à partir d'une pluralité d'alimentations (A1, ..., An+1), comportant :

- des moyens de couplage pour assurer une addition des intensités fournies par les alimentations, tout en interdisant une inversion du sens du courant dans chaque alimentation;
- et des moyens limiteurs pour limiter l'intensité débitée par chaque alimentation, à une valeur maximale prédéterminée;

caractérisé en ce que pour chaque charge (Cj) il comporte un bus d'alimentation (LIj), propre à cette charge (Cj), et reliant cette charge (Cj) à chacune des alimentations (A1,...,An+1);

en ce que les moyens de couplage comportent dans chaque alimentation (A1, ..., An+1), pour chaque charge (C1, ..., Cj, ..., $C_k$), un dispositif de couplage (CRij) propre à cette charge, pour coupler cette alimentation (Ai) au bus d'alimentation propre à cette charge Cj;

et en ce que les moyens limiteurs comportent, dans chaque alimentation, pour chaque charge (C1, ..., Cj, ..., $C_k$) un limiteur de courant (LCij) pour limiter l'intensité fournie par cette alimentation (Ai) à cette charge (Cj).

**2)** Système selon la revendication 1 caractérisé en ce que tous les limiteurs (LCij) sont du type à disjonction et à réarmement automatique;

et en ce qu'ils comportent des moyens (LS, U1, Q3; CK, Q5) pour synchroniser le réarmement de tous ces limiteurs.

**3)** Système selon la revendication 1, comportant n+1 alimentations, caractérisé en ce que chacun desdits limiteurs (LCij) limite à $\frac{Ij}{n}$ où Ij est l'intensité maximale consommée par la charge (Cj) correspondant à ce limiteur.

# FIG.1

# FIG.2

FIG. 3

EP 0 685 917 A1

# FIG. 4

EP 0 685 917 A1

Office européen
des brevets

**RAPPORT DE RECHERCHE EUROPEENNE**

Numero de la demande

EP 95 40 1237

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | US-A-5 073 848 (STEIGERWALD ET AL.) * colonne 3, ligne 43 - ligne 47; figure 2 * | 1 | H02J1/10 H02M3/28 H02H9/02 |
| A | DE-A-40 09 077 (ANT NACHRICHTENTECHNIK) * abrégé; figure 1 * | 1 | |
| A | EP-A-0 547 418 (INTERNATIONAL BUSINESS MACHINES) * abrégé * * colonne 1, ligne 50 - ligne 57; figure 2 * | 1 | |
| A | US-A-4 788 449 (KATZ) * abrégé; revendication 2; figures * | 1 | |
| A | DE-A-32 04 160 (VEREINIGTE FLUGTECHNISCHE WERKE) * abrégé; figure 1 * | 1 | |
| A | US-A-4 533 970 (BROWN) * colonne 4, ligne 10 - ligne 22; figures * | 3 | DOMAINES TECHNIQUES RECHERCHES (Int.Cl.6) H02J G05F H02M G06F H02H |
| A | EP-A-0 529 605 (ANT NACHRICHTENTECHNIK) * abrégé; figure 1 * | 3 | |
| A | US-A-3 922 595 (VIERI) * abrégé; figure 1 * | 3 | |

Le présent rapport a été établi pour toutes les revendications

| Lieu de la recherche | Date d'achèvement de la recherche | Examinateur |
|---|---|---|
| BERLIN | 11 Septembre 1995 | Kempen, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

12